# EUROPÄISCHE PATENTSCHRIFT

(11) **EP 4 013 977 B1**
(45) Veröffentlichungstag und Bekanntmachung des Hinweises auf die Patenterteilung: **06.05.2026**
(21) Anmeldenummer: 20739653.2
(22) Anmeldetag: 10.07.2020
(51) Int. Cl.: F16G 1/28, C08L 15/00

(54) **ZAHNRIEMEN ZUR VERWENDUNG IN ÖLUMGEBUNG**
TOOTHED BELT FOR USE WHILE SURROUNDED WITH OIL
COURROIE DENTÉE DESTINÉE À ÊTRE UTILISÉE TOUT EN ÉTANT ENTOURÉE D'HUILE

(30) Priorität: 13.08.2019 DE 102019212077
(43) Veröffentlichungstag der Anmeldung: 22.06.2022
(73) Patentinhaber: ContiTech Deutschland GmbH, 30175 Hannover (DE)
(72) Erfinder: KANZOW, Henning, 30419 Hannover (DE); TEVES, Reinhard, 30419 Hannover (DE); FINZELBERG, Jan, 30419 Hannover (DE); WELL, Michael, 30419 Hannover (DE); MAHNKEN, Claus-Lüder, 30419 Hannover (DE); SCHÖNFELDER, Florian, 30419 Hannover (DE)
(74) Vertreter: Preusser, Andrea
(86) Internationale Anmeldenummer: PCT/EP2020/069505
(87) Internationale Veröffentlichungsnummer: WO 2021/028129

(56) Entgegenhaltungen:
- EP-A1- 2 664 645
- EP-A1- 2 687 750
- EP-A2- 2 405 155
- WO-A2-2008/070878
- DE-A1- 102008 037 561
- DE-A1- 102010 017 781
- DE-A1- 102010 017 782
- DE-A1- 102017 220 469

## Beschreibung

Die vorliegende Erfindung betrifft einen Zahnriemen zur Verwendung in Ölumgebung mit einer Riemenrückenseite und einer zahnförmigen Kraftübertragungsseite, wobei der Zahnriemen einen elastischen Grundkörper umfasst, der zumindest auf der Kraftübertragungsseite mindestens eine Textilauflage aufweist, welche mit einer Elastomerbeschichtung versehen ist, dadurch gekennzeichnet, dass die Elastomerbeschichtung (a) mindestens 60 phr einer Polymerbasis, ausgewählt aus der Gruppe, bestehend aus voll- oder teilhydriertem Nitrilkautschuk, Acrylatkautschuk, Ethylen-Acrylatkautschuk, Polyurethan, Urethanacrylat und Kombinationen davon, (b) 3 bis 100 phr zumindest eines Füllstoffes mit einer spezifischen Oberfläche (BET) von mindestens 50 m²/g, und (c) 3 bis 50 phr zumindest eines Reaktivverdünners, vorzugsweise ausgewählt aus der Gruppe, bestehend aus Acrylaten, Methacrylaten, Vinylethern, Glycidylethern und Kombinationen davon, umfasst, wobei die Elastomerbeschichtung weniger als 1 phr an Gleitmitteln enthält. Die vorliegende Erfindung betrifft ferner die Verwendung eines solchen Zahnriemens unter Öl sowie ein Verfahren zur Herstellung eines solchen Zahnriemens.

Zahnriemen sind Kraftübertragungsriemen, die eine zahnförmige Kraftübertragungsseite aufweisen und im Funktionszustand zumeist endlos geschlossen sind. Die Kraftübertragung erfolgt durch Formschluss, indem die Zähne des Zahnriemens in passende Aussparungen beispielsweise einer Antriebsscheibe eingreifen. Zahnriemen können keinen Schlupf zwischen Scheibe und Riemen verursachen. Sind aber die Übertragungskräfte zu hoch, wird der Zahnriemen durch Riemenriss, Zahnabscherung oder Überspringen zerstört. Von den formschlüssigen Zahnriemen sind reibschlüssige Riemen, wie beispielsweise Flachriemen, Keilriemen oder Keilrippenriemen, zu unterscheiden.

Herkömmlich werden Zahnriemen insbesondere trocken laufend eingesetzt, beispielsweise zur Übertragung der Drehbewegung von der Kurbel- auf die Nockenwelle im Verbrennungsmotor. Neuerdings kommen Zahnriemen aber vermehrt auch unter Öl zum Einsatz und können auf diese Weise beispielsweise auch Steuerketten in diesen Anwendungen ersetzen.

Zahnriemen weisen üblicherweise einen elastischen Grundkörper sowie ein Gewebe auf der Kraftübertragungsseite, insbesondere auf der Zahnoberfläche, auf. Der elastische Grundkörper ist zumeist ein Vulkanisat auf Basis von Elastomeren (insbesondere vollvernetzte Kautschukmischungen) und/oder thermoplastischen Elastomeren (insbesondere teilvernetzte thermoplatische Vulkanisate). Das Gewebe dient dazu, die Zähne vor Verschleiß zu schützen. Allerdings ist dabei das Gewebe bei Beanspruchung wiederum Abrieb- und Verschleißbelastungen ausgesetzt.

Traditionell wird daher versucht, einen möglichst kleinen Reibbeiwert zwischen der Zahnriemenoberfläche und der im Kontakt befindlichen Riemenscheibe zu erreichen, um auf diese Weise die Abrieb- und Verschleißbelastungen zu verringern. Ein geringer Reibbeiwert bewirkt, dass beim Einformen des Zahns in die Scheibe weniger Energie verbraucht wird und dass Reibung, die durch das Bewegen der Scheibe zwischen den Riemenzähnen auftritt, nicht zu Abrieb und Verschleiß führt. Dazu wird der Zahnriemen entweder ohne eine Beschichtung ausgeführt oder aber mit einer elastischen Beschichtung versehen, die gute Gleiteigenschaften aufweist. Dies wird durch die Verwendung eines entsprechenden Gleitmittels bzw. Gleitkörpers erreicht.

Im Stand der Technik sind eine Reihe an Maßnahmen beschrieben, um den Reibbeiwert zwischen Zahnriemen und der im Kontakt befindlichen Riemenscheibe zu verringern.

EP 1 157 813 A1, WO 2005/038294 A1, WO 2005/080821 A1 und EP 1 881 229 A1 beschreiben für trockene Anwendungen eine HNBR-Schicht, die durch Fluorpolymerteilchen in der Gewebeauflageschicht gleitfähiger gemacht wird.

WO 2007/036960 A1 beschreibt einen speziellen Zahnriemen zur Anwendung unter Öl, der mit PTFE und anderen Fluorpolymerteilchen gleitfähig gemacht wird.

DE 44 00 434 A1, EP 0 662 571 A1, EP 1 088 177 A1 und EP 1 818 567 A1 beschreiben Gewebeschichtungen, die aus einer Polyurethanbeschichtung mit teilchenförmigen Fluorpolymeren bestehen, um auf diese Weise eine verringerte Reibung und somit eine gute Abriebbeständigkeit zu erhalten. EP 2 405 155 A2 beschreibt ferner eine Beschichtung, die zur Herabsetzung des Reibbeiwerts einen Reaktivverdünner sowie ein pulverförmiges Gleitmittel enthält. WO 2005/080820 A1 beschreibt eine weitere Senkung des Reibbeiwerts durch Zusatz von Fasern in einem Elastomercompound.

In EP 2 687 750 A1 wird das Textil, welches sich auf der Zahnriemenseite, d.h. der Kraftübertragungsseite, befindet mit einem ausgehärteten Epoxidharz beschichtet. Alternativ kann auf die ausgehärtete Epoxidharzschicht noch eine Kautschukschicht aufgebracht werden. Diese Kautschukschicht liegt dann aber auf der Epoxidharzschicht auf und kann somit nicht mehr als Beschichtung der Textillage selbst betrachtetet werden.

Derartige Beschichtungen mit Gleitmitteln sind allerdings aufwändiger bzw. teurer in der Herstellung. Weiterhin können diese bei Anwendungen unter Öl das Öl verschmutzen, was im schlimmsten Fall zu Motorschäden führen kann. Noch extremer führen Riemen zu Filterverschmutzungen, die keine Oberflächenbeschichtung oder lediglich eine RFL-Haftbeschichtung auf den Geweben aufweisen. Die Motoröle umspülen die Gewebe, dringen in sie ein und zerstören sie. Das macht sich in massiver Verschmutzung der verschiedenen Filter im Motor bemerkbar. Die verschmutzten Filter verstopfen wichtige Aggregate des Motors, diese werden nicht mehr genügend mit Öl versorgt und versagen.

Der vorliegenden Erfindung liegt daher die Aufgabe zugrunde, einen verschleißbeständigen Zahnriemen zur Verwendung unter Öl bereitzustellen, welcher die vorstehend genannten Nachteile nicht aufweist und der insbesondere weniger aufwändig in der Herstellung ist und mit dem die Verschmutzung des Öls vermindert werden kann.

Diese Aufgabe wird durch die in den Ansprüchen gekennzeichneten Ausführungsformen gelöst.

Insbesondere wird erfindungsgemäß ein Zahnriemen zur Verwendung in Ölumgebung mit einer Riemenrückenseite und einer zahnförmigen Kraftübertragungsseite bereitgestellt, wobei der Zahnriemen einen elastischen Grundkörper umfasst, der zumindest auf der Kraftübertragungsseite mindestens eine Textilauflage aufweist, welche mit einer Elastomerbeschichtung versehen ist, dadurch gekennzeichnet, dass die Elastomerbeschichtung (a) mindestens 60 phr einer Polymerbasis, ausgewählt aus der Gruppe, bestehend aus voll- oder teilhydriertem Nitrilkautschuk (HNBR), Acrylatkautschuk (ACM), Ethylen-Acrylatkautschuk (EAM), Polyurethan (PU), Urethanacrylat und Kombinationen davon, (b) 3 bis 100 phr zumindest eines Füllstoffes mit einer spezifischen Oberfläche (BET) von mindestens 50 m²/g, und (c) 3 bis 50 phr zumindest eines Reaktivverdünners, vorzugsweise ausgewählt aus der Gruppe, bestehend aus Acrylaten, Methacrylaten, Vinylethern, Glycidylethern und Kombinationen davon, umfasst, wobei die Elastomerbeschichtung weniger als 1 phr an Gleitmitteln enthält.

Die in dieser Schrift verwendete Mengenangabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Es wurde nun überraschend gefunden, dass die traditionelle Strategie, die Gewebeoberfläche mit einem möglichst geringen Reibbeiwert gegen das Antriebsscheibenmaterial zu versehen, bei Anwendungen unter Öl keine optimale Haltbarkeit ergibt. Die Verringerung des Reibbeiwerts ist zwar bei trocken laufenden Riemen notwendig, und man war bisher davon ausgegangen, dass dies bei Zahnriemen, die unter Öl laufen, ebenso sei. Es wurde nun aber entdeckt, dass es bei Anwendungen unter Öl gerade vorteilhaft ist, einen hohen Reibbeiwert zum Zahnriemen einzustellen. Bei diesem hohen Reibbeiwert stellt sich eine bessere Schmierung zwischen Zahnriemenoberfläche und der Scheibenoberfläche ein. Das führt dann zu signifikant niedrigeren Reibkräften im Verbund Zahnriemenoberfläche-Öl-Scheibe und damit zu signifikant besseren Zahnriemenlaufzeiten. Folglich führt die Verwendung einer Zahnriemenoberfläche, die einen geringeren Gehalt an Gleitmitteln aufweist oder frei von Gleitmitteln ist und somit einen höheren Reibbeiwert hat, unter Öl überraschenderweise zu signifikant höheren Laufzeiten im Vergleich zu Zahnriemenoberflächen mit Gleitmitteln.

Die Figuren zeigen das Folgende:
Figur 1 zeigt einen erfindungsgemäßen Zahnriemen.
Figur 2 zeigt eine allgemeine Messanordnung zur Bestimmung eines Reibbeiwertes.
Figur 3a zeigt ein Messverfahren zur Bestimmung des Reibbeiwertes der Riemenköpfe (Seitenansicht).
Figur 3b zeigt ein Messverfahren zur Bestimmung des Reibbeiwertes der Riemenköpfe (Frontansicht).
Figur 4a zeigt ein Messverfahren zur Bestimmung des Reibbeiwertes der Riemenstege (Seitenansicht).
Figur 4b zeigt ein Messverfahren zur Bestimmung des Reibbeiwertes der Riemenstege (Frontansicht).
Figur 5 zeigt die Messanordnung zur Riemenprüfung.

Der erfindungsgemäße Zahnriemen weist eine Riemenrückenseite (die Rückseite des Riemens) und eine zahnförmige Kraftübertragungsseite (die Vorderseite des Riemens) auf, wobei der Zahnriemen einen elastischen Grundkörper umfasst.

Der elastische Grundkörper kann aus jedwedem geeigneten elastischen Material gebildet sein und ist vorzugweise ein elastischer Grundkörper auf der Basis wenigstens eines thermoplastischen Elastomers oder auf der Basis eines Vulkanisats. Unter einem Elastomer werden formfeste, aber elastisch verformbare Kunststoffe verstanden, deren Glasübergangspunkt sich unterhalb der Raum- bzw. Einsatztemperatur befindet. Das Vulkanisat liegt vorzugsweise in Form einer vulkanisierten Kautschukmischung, enthaltend wenigstens eine Kautschukkomponente und Mischungsingredienzien, vor. Als Kautschukkomponente wird insbesondere ein Ethylen-Propylen-Mischpolymerisat (EPM), ein Ethylen-Propylen-Dien-Mischpolymerisat (EPDM), (teil)hydrierter Nitrilkautschuk (HNBR), Chloropren-Kautschuk (CR), Fluor-Kautschuk (FKM), Naturkautschuk (NR), Styrol-Butadien-Kautschuk (SBR), Polyurethan (PU) oder Butadien-Kautschuk (BR) eingesetzt, die unverschnitten oder mit wenigsten einer weiteren Kautschukkomponente, insbesondere mit einem der vorgenannten Kautschuktypen, verschnitten sind, beispielsweise in Form eines EPM/EPDM- oder SBR/BR-Verschnittes. Gemäß einer besonders bevorzugten Ausführungsform umfasst die Kautschukkomponente Ethylen-Propylen-Mischpolymerisat (EPM), Ethylen-Propylen-Dien-Mischpolymerisat (EPDM) oder einen Blend aus Ethylen-Propylen-Mischpolymerisat (EPM) und Ethylen-Propylen-Dien-Mischpolymerisat (EPDM) (auch als EPM/EPDM-Verschnitt bezeichnet).

Die Mischungsingredienzien umfassen vorzugsweise wenigstens einen Vernetzer oder ein Vernetzersystem (Vernetzungsmittel und Beschleuniger). Wegen der besseren Wärmealterungsbeständigkeit werden bevorzugt Peroxide als Vernetzer eingesetzt. Weitere Mischungsingredienzien sind zumeist noch Füllstoffe, Verarbeitungshilfsmittel, Weichmacher, Alterungsschutzmittel sowie gegebenenfalls weitere Zusatzstoffe, beispielsweise Fasern und Farbpigmente. Diesbezüglich wird auf den allgemeinen Stand der Kautschukmischungstechnologie verwiesen.

Der elastische Grundkörper kann ferner eingebettete Zugträger bzw. Zugstränge zur Verstärkung enthalten. Alternativ kann der elastische Grundkörper auf der Riemenrückenseite einen Festigkeitsträger in Form von Zugträgern bzw. Zugsträngen und eine Decklage umfassen. Es ist besonders bevorzugt, dass der Festigkeitsträger in Längsrichtung verlaufende, parallel angeordnete Zugträger aufweist. Vorzugsweise bestehen die Zugträger bzw. Zugstränge aus Stahl, Polyamid (PA), Aramid (AR), Polyester (PE), Polyethylenterephthalat (PET), Glasfasern, Kohlefasern, Polyetherketon (PEK), Polyetheretherketon (PEEK), Polyethylen-2,6-naphthalat (PEN) oder Kombinationen davon.

Der elastische Grundkörper weist zumindest auf der Kraftübertragungsseite mindestens eine Textilauflage auf. Optional kann auch die Riemenrückenseite zusätzlich eine Textilauflage aufweisen. Diese kann direkt auf der Rückseite des elastischen Grundkörpers oder aber auf der optionalen Decklage aufgebracht sein. Gemäß einer bevorzugten Ausführungsform der vorliegenden Erfindung umfasst der elastische Grundkörper auf der Riemenrückenseite weiter einen Festigkeitsträger in Form von Zugsträngen und eine Decklage, wobei die Decklage ebenfalls mit einer Textilauflage versehen sein kann. Die Textilauflagen auf der Riemenrückseite und der Kraftübertragungsseite können gleich oder verschieden sein. Gemäß einer bevorzugten Ausführungsform weisen die Kraftübertragungsseite und die Riemenrückenseite des Zahnriemens gleiche Textilauflagen auf, d.h. auch die nachfolgend näher beschriebenen Elastomerbeschichtungen auf den Textilauflagen sind vorzugsweise gleich. Der Zahnriemen kann aber auch mit der beschichteten Textilauflage vollständig ummantelt sein.

Die Textilauflage kann jedwede geeignete Textilauflage sein. In einer bevorzugten Ausführungsform der vorliegenden Erfindung ist die Textilauflage aus der Gruppe, bestehend aus Geweben, Gewirken, Gestricken, Vliesen und Kombinationen davon, ausgewählt.

Die Textilauflage umfasst vorzugsweise ein Material, ausgewählt aus der Gruppe, bestehend aus Cellulose (insbesondere Baumwolle (CO), Viskose (CV), Flachs, Sisal, Hanf oder Leinen), Seide, Kaschmir, Rosshaar, Aramid (AR), Polyurethan (PU), Polybenzimidazol (PBI), Melamin (MEL), Polybenzoxazol (PBO), Kohlenstoff, Polyamid (PA) (insbesondere PA6.6, PA12, PA6), Polycarbonat (PC), Polyethylen (PE) (insbesondere UHMWPE), Polypropylen (PP), Polystyrol (PS), Polyacryl (PAN), Acetat (CA), Triacetat (CTA), Polyvinylalkohol (PVA), Polyamidimid (PAI), Polytrimethylenterephthalat (PTT), Polyimid (PI), Polybutylenterephthalat (PBT), Polytetrafluorethylen (PTFE), Polyphenylensulfid (PPS), Polyetheretherketon (PEEK), Polyester (PES) (insbesondere Polyethylenterephthalat (PET)) und Kombinationen davon. Besonders bevorzugt umfasst die Textilauflage ein Material, ausgewählt aus Aramid (AR), PA6.6, PA6, Polyethylenterephthalat (PET), Polyurethan (PU) und Kombinationen davon.

Handelt es sich bei der Textilauflage um ein Gewebe, Gewirk oder Gestrick, ist diese vorzugsweise aus einem oder mehreren Garnen aus den vorstehend genannten Materialien hergestellt. Es können aber auch Mischfasergarne (z.B. bestehend aus Baumwoll- und Polyesterfasern) verwendet werden. Handelt es sich bei der Textilauflage um einen Vlies, kann dieser aus Fasern aus einem oder mehreren der vorstehend genannten Materialien bestehen.

Handelt es sich bei der Textilauflage um ein Gewirk oder Gestrick, ist es bevorzugt, dass wenigstens ein weiterer zusätzlicher Faden zur Stabilisierung des Gewirks oder Gestricks im Verarbeitungsprozess vorhanden ist. Als zusätzlicher Faden kann beispielsweise ein Polyurethanfaden (beispielsweise ein Elastangarn) eingesetzt werden. Der Vorteil der Verwendung eines zusätzlichen Fadens liegt darin, dass dadurch auch eine gewisse Längsdehnung erreicht kann. Dies ist gerade bei Zahnriemen vorteilhaft, da man bei diesen eine hohe Dehnbarkeit des Textils vor allem in der Längsrichtung (Umlaufrichtung) benötigt, um die Zähne ausformen zu können.

Die Textilauflage ist ferner mit einer Elastomerbeschichtung versehen. Diese Elastomerbeschichtung umfasst mindestens 60 phr einer Polymerbasis, ausgewählt aus der Gruppe, bestehend aus voll- oder teilhydriertem Nitrilkautschuk (HNBR), Acrylatkautschuk (ACM), Ethylen-Acrylatkautschuk (EAM), Polyurethan, Urethanacrylat und Kombinationen davon. Vorzugsweise umfasst die Elastomerbeschichtung mindestens 80 phr, ganz besonders bevorzugt 100 phr der Polymerbasis. Besonders bevorzugte Polymere sind Urethanacrylat, Nitrilkautschuk und Kombinationen davon. Gemäß einer besonders bevorzugten Ausführungsform der vorliegenden Erfindung umfasst die Polymerbasis der Elastomerbeschichtung voll- oder teilhydrierten Nitrilkautschuk (HNBR).

Die Elastomerbeschichtung umfasst ferner 3 bis 100 phr zumindest eines Füllstoffes. Vorzugsweise ist der Füllstoff in einer Menge von 10 bis 40 phr, ganz besonders bevorzugt in einer Menge von 20 bis 30 phr enthalten. Der mindestens eine Füllstoff kann jedes geeignete Material sein, das im Stand der Technik für die Verwendung als Füllstoff bekannt ist und eine spezifische Oberfläche (BET) von mindestens 50 m²/g aufweist (bestimmt nach ISO 9277:2010). Geeignete Beispiele für Füllstoffe sind insbesondere Kieselsäuren und Ruße. Geeignete Kieselsäuren sind z.B. gefällte Kieselsäure, pyrogene Kieselsäure, dispergierte Kieselsäure, kolloidale Kieselsäure, funktionalisierte Kieselsäure und Kombinationen davon. Vorzugsweise weist die zu verwendende Kieselsäure eine BET-spezifische Oberfläche (BET) von 50 bis 450 m²/g und besonders bevorzugt von 120 bis 410 m²/g auf. Geeignete handelsübliche Kieselsäuren sind z.B. Aerosil 300 (Evonik; eine pyrogene Kieselsäure mit einer spezifischen Oberfläche von 300 m²/g), Aerodisp W7520 (Evonik; eine wässrige Dispersion von hydrophiler pyrogener Kieselsäure mit einer spezifischen Oberfläche von 200 m²/g), Levasil CT 16APL (Nouryon; eine kolloidale Kieselsäure, natriumstabilisiert mit einer spezifischen Oberfläche von 160 m²/g), Levasil CT16 PNL (Nouryon, eine kolloidale Kieselsäure, ammoniakstabilisiert, spezifische Oberfläche von 160 m²/g) oder Dispercoll S3030/1 (Covestro, eine wässrige anionische kolloidale Lösung aus amorpher Kieselsäure, natriumstabilisiert, spezifische Oberfläche von 300 m²/g). Geeignete Ruße sind z.B. Acetylenruß, Thermoruß, Kanalruß, Gasruß, Ofenruß, Lampenruß, pyrolytischer Ruß und Kombinationen daraus. Die bevorzugten Füllstoffe gemäß der vorliegenden Erfindung sind Kieselsäure, Ruß und Kombinationen davon.

Die Elastomerbeschichtung umfasst ferner 3 bis 50 phr zumindest eines Reaktivverdünners. Dieser ist vorzugsweise in einer Menge von 5 bis 30 phr und besonders bevorzugt in einer Menge von 10 bis 20 phr in der Elastomerbeschichtung enthalten. Im Rahmen der vorliegenden Erfindung wird unter einem Reaktivverdünner ein Verdünner gemäß DIN 55945:2007-03 verstanden. Gemäß einer bevorzugten Ausführungsform der vorliegenden Erfindung ist der Reaktivverdünner aus der Gruppe, bestehend aus Acrylaten, Methacrylaten, Vinylethern, Glycidylethern und Kombinationen davon, ausgewählt. In einer besonders bevorzugten Ausführungsform handelt es sich bei dem Reaktivverdünner um Urethanacrylat (UA), Dipropylenglycoldiacrylat (DPGDA), Tripropylenglycoldiacrylat (TPGDA), Hexandioldiacrylat (HDDA) (bevorzugt Hexan-1,6-dioldiacrylat (1,6-HDDA)), Trimethylpropantriacrylat (TMPTA), Urethandimethacrylat (HEMA-MDI) und Kombinationen davon. Insbesondere durch die Verwendung von Urethanacrylat kann zusätzlich die Polarität der Mischung vergrößert werden, wodurch die Quellung des Kraftübertragungsriemens in unpolaren Medien verringert wird. Der Reaktivverdünner kann hierbei auch Lösemittel enthalten. Die Mengenangaben beziehen sich in diesem Fall auf Reaktivverdünner inklusive Lösemittel.

Die vorliegende Erfindung ist insbesondere dadurch gekennzeichnet, dass die Elastomerbeschichtung im Wesentlichen frei von Gleitmitteln ist, d.h. der Gehalt dieser weniger als 1 phr beträgt . Durch die Verringerung der Menge an Gleitmitteln bzw. deren Vermeidung in der Elastomerbeschichtung wird der Reibbeiwert der zahnförmigen Kraftübertragungsseite erhöht, was überraschenderweise vorteilhaft für Anwendungen unter Öl ist. Als Gleitmittel (auch als Gleitkörper bezeichnet) werden im Rahmen der vorliegenden Erfindung Additive verstanden, welche den Reibbeiwert der zahnförmigen Kraftübertragungsseite verringern. Gemäß einer bevorzugten Ausführungsform der vorliegenden Erfindung enthält die Elastomerbeschichtung weniger als 40 phr an Gleitmitteln, ausgewählt aus der Gruppe, bestehend aus fluorhaltigen Gleitmitteln wie Fluorpolymeren wie PTFE, PFA und PFPE, fluorfreien Gleitmitteln wie Molybdänsulfide, Graphite, Graphene, Talk, Glimmer, Bornitride, Silikone und Siloxanharze, und Kombinationen davon.

Die Elastomerbeschichtung kann weitere Komponenten enthalten, beispielsweise Alterungsschutzmittel oder Metallsalze einer ungesättigten Carbonsäure, vorzugsweise eines Zinksalzes einer ungesättigten Carbonsäure, oder Kombinationen davon. Gemäß einer bevorzugten Ausführungsform der vorliegenden Erfindung umfasst die Elastomerbeschichtung 20 bis 30 phr eines Metallsalzes einer ungesättigten Carbonsäure.

Gemäß einer Ausführungsform der vorliegenden Erfindung umfasst die Elastomerbeschichtung (a) mindestens 80 phr einer Polymerbasis, ausgewählt aus der Gruppe, bestehend aus voll- oder teilhydriertem Nitrilkautschuk (HNBR), Acrylatkautschuk (ACM), Ethylen-Acrylatkautschuk (EAM), Urethan, Urethanacrylat und Kombinationen davon, (b) 10 bis 40 phr eines Füllstoffes mit einer spezifischen Oberfläche (BET) von mindestens 50 m²/g, ausgewählt aus Kieselsäure, Ruß und Kombinationen davon, (c) 5 bis 30 phr eines Reaktivverdünners gemäß DIN 55945:2007-03, ausgewählt aus der Gruppe, bestehend aus Acrylaten, Methacrylaten, Vinylethern, Glycidylethern und Kombinationen davon, wobei die Elastomerbeschichtung weniger als 1 phr an Gleitmitteln, ausgewählt aus der Gruppe, bestehend aus fluorhaltigen Gleitmitteln wie Fluorpolymeren wie PTFE, PFA und PFPE, fluorfreien Gleitmitteln wie Molybdänsulfide, Graphite, Graphene, Talk, Glimmer, Bornitride, Silikone und Siloxanharze, und Kombinationen davon, enthält. Besonders bevorzugt umfasst diese Elastomerbeschichtung als Polymerbasis (a) 80 bis 100 phr voll- oder teilhydrierten Nitrilkautschuk (HNBR), als Füllstoff (b) 10 bis 20 phr Ruß und 10 bis 20 phr Kieselsäure, als Reaktivverdünner (c) 5 bis 20 phr eines Reaktivverdünners auf Acrylatbasis, sowie 20 bis 30 phr eines Zinksalzes einer ungesättigten Carbonsäure.

Weiterhin ist die Elastomerbeschichtung vorzugsweise im Wesentlichen frei von fluorhaltigen Komponenten. Darunter wird im Rahmen der vorliegenden Erfindung verstanden, dass die Elastomerbeschichtung weniger als 1 Massen-% Fluor enthält.

Um der zahnförmigen Kraftübertragungsseite eine ausreichende Beständigkeit zu verleihen, weist die Elastomerbeschichtung vorzugsweise eine Härte nach Shore A von 70 bis 100, besonders bevorzugt von 85 bis 95 auf (gemessen nach DIN 53 505).

Die Elastomerbeschichtung kann jedwede geeignete Dicke aufweisen. Gemäß einer bevorzugten Ausführungsform weist die Elastomerbeschichtung eine Dicke von 0,1 mm bis 0,9 mm, besonders bevorzugt von 0,2 bis 0,5 mm, auf. Die Dicke der Textilauflage beträgt bevorzugt 0,5 bis 1 mm und die Eindringtiefe der Beschichtung in die Textilauflage beträgt bevorzugt 10 bis 90%, besonders bevorzugt 50 bis 90%.

Die Elastomerbeschichtung kann durch jedwedes dem Fachmann bekanntes Vernetzungsmittel vernetzt sein. Weiterhin handelt es sich bei der Vernetzung bevorzugt um eine radikalische Vernetzung, besonders bevorzugt unter Verwendung von organischen Peroxiden.

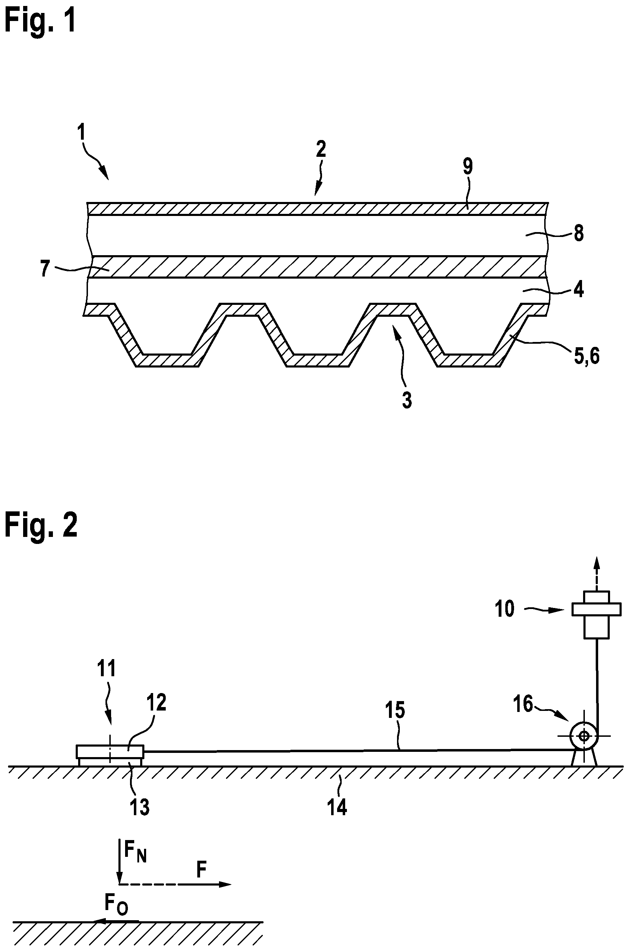

Die Erfindung wird nunmehr anhand der Figur 1 näher erläutert. Diese Figur zeigt einen erfindungsgemäßen Zahnriemen 1 mit einer Riemenrückenseite 2 und einer zahnförmigen Kraftübertragungsseite 3, wobei der Zahnriemen 1 einen elastischen Grundkörper 4 umfasst, der zumindest auf der Kraftübertragungsseite 3 eine Textilauflage 5 aufweist, welche mit einer Elastomerbeschichtung 6 versehen ist. Gemäß bevorzugten Ausführungsformen kann der Zahnriemen ferner einen Zugträger 7, eine Decklage 8 und/oder eine zweite Textilauflage 9 auf der Riemenrückenseite 2 umfassen.

Wie vorstehend bereits erläutert, wird durch die Verringerung der Menge an Gleitmitteln bzw. deren Vermeidung in der Elastomerbeschichtung der Reibbeiwert der zahnförmigen Kraftübertragungsseite erhöht. Gemäß einer bevorzugten Ausführungsform der vorliegenden Erfindung weist die Kraftübertragungsseite des erfindungsgemäßen Zahnriemens einen Reibkoeffizienten bzw. Reibbeiwert von mindestens 0,3, vorzugsweise von mindestens 0,6, gegen Stahl, gemessen im ölfreien Zustand, auf. Gemäß der vorliegenden Erfindung wird der Reibkoeffizient des Zahnriemens als der geringere der beiden Werte, die (i) für die Zahnköpfe sowie (ii) für die Stege zwischen den Zähnen bestimmt werden, definiert.

Der Reibkoeffizient wird im Rahmen der vorliegenden Erfindung in Anlehnung an DIN 53375 mit einer Zugprüfmaschine gemäß DIN EN 7500-1 (vgl. Figur 2) und den folgenden Parametern gemessen:
- Reibklotz: Kantenlänge 63 mm
- Untersuchter Zahnriemen: Profil 8m, 6 Zähne, Riemenbreite 12 mm
- Gleitgeschwindigkeit: 100 ± 10 mm/min
- Gleitweg: mindestens 60 mm
- Normalkraft: variabel

Die Reibung wird sowohl für die Zahnköpfe als auch für die Stege zwischen den Zähnen bestimmt. Der vorstehend definierte Reibkoeffizient (vorzugsweise mindestens 0,3 bzw. 0,6) ist der geringere der beiden gemessenen Werte.

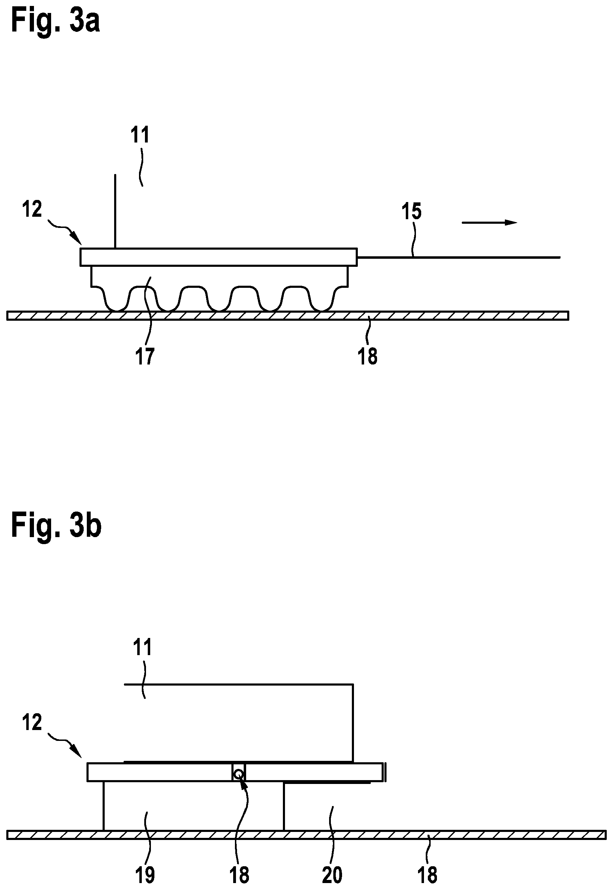

Zur Bestimmung der Reibung der Zahnköpfe werden zwei Riemen nebeneinander auf eine glatte Stahlplatte als Reibpartner gelegt (vgl. die Darstellung des Messverfahrens in den Figuren 3a und 3b). Zur Auswertung wird der Gleitreibungskoeffizient als Quotient aus Zugkraft und Normalkraft bestimmt. Die Normalkraft wird aus der Summe von Zusatzgewicht, Reibklotz und Riemengewichte bestimmt.

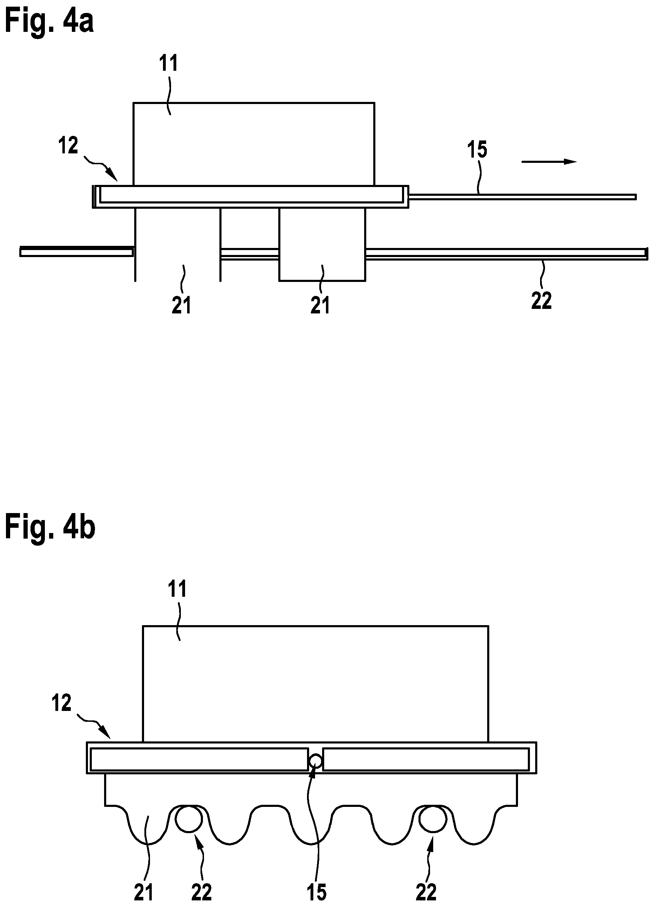

Zu Bestimmung der Stegreibung wird analog vorgegangen, wobei die Messung um 90° gedreht stattfindet. Reibpartner in diesem Fall sind zwei seitlich verschiebbare glatte Stahlstangen, deren Durchmesser kleiner als der Rundungsdurchmesser des Riemensteges sein muss (vgl. die Darstellung des Messverfahrens in den Figuren 4a und 4b).

Der erfindungsgemäße Zahnriemen kann ferner eine zusätzliche Beschichtung auf Basis von Resorcin-Formaldehyd-Latex (RFL) aufweisen, die als Haftbeschichtung das Anhaften der Textilauflage an den elastischen Grundkörper erleichtert bzw. verbessert.

Die Elastomerbeschichtung des erfindungsgemäßen Zahnriemens weist vorzugsweise eine geschlossene bzw. durchgehende Oberfläche auf. Diese bietet idealerweise eine gleichförmige Oberfläche und ist gegen Quellung und sonstigen Angriff durch das Motoröl stabil und unter den Einsatzbedingungen im Motor verschleißfest.

Die vorliegende Erfindung betrifft ferner die Verwendung des erfindungsgemäßen Zahnriemens unter Öl. Gemäß einer Ausführungsform der vorliegenden Erfindung umfasst die Elastomerbeschichtung des verwendeten Zahnriemens (a) mindestens 80 phr einer Polymerbasis, ausgewählt aus der Gruppe, bestehend aus voll- oder teilhydriertem Nitrilkautschuk (HNBR), Acrylatkautschuk (ACM), Ethylen-Acrylatkautschuk (EAM), Urethan, Urethanacrylat und Kombinationen davon, (b) 10 bis 40 phr eines Füllstoffes mit einer spezifischen Oberfläche (BET) von mindestens 50 m²/g, ausgewählt aus Kieselsäure, Ruß und Kombinationen davon, (c) 5 bis 30 phr eines Reaktivverdünners gemäß DIN 55945:2007-03, ausgewählt aus der Gruppe, bestehend aus Acrylaten, Methacrylaten, Vinylethern, Glycidylethern und Kombinationen davon, wobei die Elastomerbeschichtung weniger als 1 phr an Gleitmitteln, ausgewählt aus der Gruppe, bestehend aus fluorhaltigen Gleitmitteln wie Fluorpolymeren wie PTFE, PFA und PFPE, fluorfreien Gleitmitteln wie Molybdänsulfide, Graphite, Graphene, Talk, Glimmer, Bornitride, Silikone und Siloxanharze, und Kombinationen davon, enthält. Besonders bevorzugt umfasst diese Elastomerbeschichtung des verwendeten Zahnriemens als Polymerbasis (a) 80 bis 100 phr voll- oder teilhydrierten Nitrilkautschuk (HNBR), als Füllstoff (b) 10 bis 20 phr Ruß und 10 bis 20 phr Kieselsäure, als Reaktivverdünner (c) 5 bis 20 phr eines Reaktivverdünners auf Acrylatbasis, sowie 20 bis 30 phr eines Zinksalzes einer ungesättigten Carbonsäure.

Die vorliegende Erfindung betrifft darüber hinaus die Verwendung eines Zahnriemen mit einer Riemenrückenseite und einer zahnförmigen Kraftübertragungsseite unter Öl, wobei der Zahnriemen einen elastischen Grundkörper umfasst, der zumindest auf der Kraftübertragungsseite mindestens eine Textilauflage aufweist, welche mit einer Elastomerbeschichtung versehen ist, dadurch gekennzeichnet, dass die Kraftübertragungsseite des Zahnriemens einen Reibkoeffizienten von mindestens 0,3 gegen Stahl, gemessen im ölfreien Zustand, aufweist. Gemäß einer bevorzugten Ausführungsform werden die erfindungsgemäßen Riemen zur formschlüssigen Kraftübertragung verwendet.

Die vorliegende Erfindung betrifft ferner ein Verfahren zur Herstellung des erfindungsgemäßen Zahnriemens, umfassend die folgenden Schritte:
(a) das Bereitstellen eines noch unvulkanisierten Riemenrohlings, der eine Riemenrückenseite und eine zahnförmige Kraftübertragungsseite aufweist,
(b) das Aufbringen einer Textilauflage auf die zahnförmige Kraftübertragungsseite des unvulkanisierten Riemenrohlings,
(c) das Aufbringen einer Elastomerbeschichtung auf die Textilauflage, wobei die Elastomerbeschichtung
   - mindestens 60 phr einer Polymerbasis, ausgewählt aus der Gruppe, bestehend aus voll- oder teilhydriertem Nitrilkautschuk (HNBR), Acrylatkautschuk (ACM), Ethylen-Acrylatkautschuk (EAM), Polyurethan (PU), Urethanacrylat und Kombinationen davon,
   - 3 bis 100 phr zumindest eines Füllstoffes mit einer spezifischen Oberfläche (BET) von mindestens 50 m²/g, und
   - 3 bis 50 phr zumindest eines Reaktivverdünners, vorzugsweise ausgewählt aus der Gruppe, bestehend aus Acrylaten, Methacrylaten, Vinylethern, Glycidylethern und Kombinationen davon,
   umfasst und weniger als 1 phr an Gleitmitteln enthält, und
(d) das Vulkanisieren des Riemenrohlings unter Ausbildung eines Haftverbundes von elastomeren Grundkörper, Textilauflage und Elastomerbeschichtung.

In Bezug auf die Zusammensetzung des elastomeren Grundkörpers, der Textilauflage sowie der Elastomerbeschichtung wird auf die vorstehenden Ausführungen zu dem erfindungsgemäßen Zahnriemen verwiesen.

Gemäß einer bevorzugten Ausführungsform des erfindungsgemäßen Verfahrens wird die Elastomerbeschichtung in Schritt (c) lösungsmittelfrei auf die Textilauflage aufgebracht. Dazu wird vorzugsweise das im Stand der Technik bekannte Aumaverfahren verwendet. Zum Präparieren der Textilauflage wird hiermit auf das in DE 10 2017 206 844 A1 beschriebene Verfahren Bezug genommen. Gemäß einer weiteren bevorzugten Ausführungsform wird die Elastomerbeschichtung in Schritt (c) in einer Dicke von 0,1 mm bis 0,9 mm aufgebracht. Gemäß einer weiteren bevorzugten Ausführungsform wird die Elastomerbeschichtung unter Einsatz von organischen Peroxiden vernetzt. Das Vulkansieren kann in jedweder geeigneten, dem Fachmann bekannten Art und Weise erfolgen.

Die Erfindung wird nunmehr anhand von Beispielen näher erläutert.

### Beispiele

Erfindungsgemäße Zahnriemen und Vergleichszahnriemen mit den in Tabelle 1 aufgeführten Eigenschaften wurden hergestellt und auf einem Prüfstand untersucht.

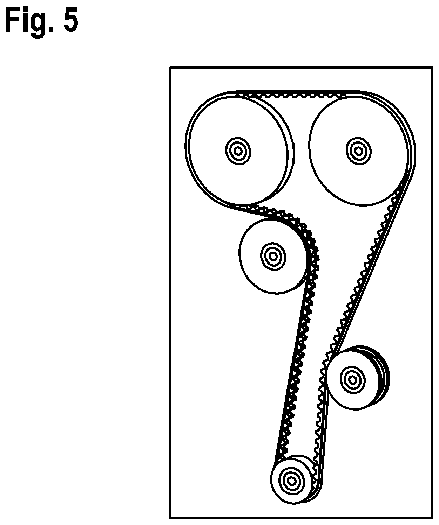

Der Prüfstand (dargestellt in Figur 5) wurde elektrisch betrieben, wobei der Riemen in Öl mit einer Geschwindigkeit von 4000 UPM lief. Die Öltemperatur betrug 120°C. Der getestete Riemen hatte die Dimension 149 STD 8M und eine Breite von 12 mm. Dabei gibt der Wert "149" die Anzahl der Zähne des Zahnriemens an und die Bezeichnung "STD 8M" definiert den Zahnabstand als 8 mm (definiert in ISO 9010:1997(E), Profil "TYPE YS"). Die Übertragungskräfte konnten variabel eingestellt werden.

Die Riemenhaltbarkeit wurde bestimmt, indem der Riemen einer Belastung von 100 N/mm Riemenbreite ausgesetzt wurde und die Dauer bis zum Riemenriss bestimmt wurde.

Der Riemenverschleiß wurde bestimmt, indem der Riemen einer Belastung von 90 N/mm Riemenbreite ausgesetzt und dann visuell begutachtet wurde.

**Tabelle 1:**

| Beispiel | 1 | 2 (Vergleich) | 3 (Vergleich) | 4 (Vergleich) | 5 (Vergleich) |
|---|---|---|---|---|---|
| Gewebe | Aramid/ Polyamid-Hybridgewebe | Aramid/ Polyamid-Hybridgewebe | Aramid/ Polyamid-Hybridgewebe | Polyamid | Polyamid |
| Beschichtung | HNBR ohne Gleitmittel | 50% PTFE in Urethanacrylat | HNBR mit >10 phr PTFE Gleitmittel | 50% PTFE in PU | Ohne Beschichtung (nur RFL Haftsystem) |
| Reibbeiwert¹⁾ | 0,40 | 0,14 | 0,20 | 0,14 | 0,11 |
| Riemenhaltbarkeit | 251 h | 30 h²⁾ | | | |
| Riemenverschleiß | Nach 407 h kein Riemenausfall und keine Verschmutzung des Motors | Nach 82 h Zahnabscherung und massiver Gewebeabrieb mit Filterverschmutzung | | | |

| | | | | | |
|---|---|---|---|---|---|
| ¹⁾ Bestimmt mit dem vorstehend beschriebenen Verfahren; jeweils der Mittelwert aus drei Messungen ²⁾ Mittelwert aus dem Test zweier Riemen | | | | | |

Die vorstehenden Beispiele zeigen, dass der erfindungsgemäße Zahnriemen mit einer Beschichtung ohne Gleitmittel (und folglich mit einem höheren Reibbeiwert, Beispiel 1) zu signifikant verringertem Verschleiß und damit zu einer deutlich längeren Haltbarkeit unter Öl im Vergleich zu herkömmlichen Zahnriemen (siehe insbesondere Vergleichsbeispiel 2) führt.

Riemen ohne Beschichtung auf dem Gewebe oder lediglich mit RFL-Haftbeschichtung fallen nach kurzer Zeit dadurch aus, dass das Gewebe durch die hochdynamischen Ölströme zerstört wird und die Faserreste im Motor Schaden anrichten. Riemen mit Gleitmitteln in HNBR, Acrylat zeigen bei extremen Bedingungen und kritischen Motoren dadurch Schwächen, dass abgehende Partikel in die Filter gelangen. Im Rahmen der vorliegenden Erfindung wurde gefunden, dass das Weglassen von Gleitmitteln im Gegensatz zur Anwendung in ölfreien Riemen eine signifikante Verbesserung der Eigenschaften in Öl führt. Es werden keine der Gleitmittel mehr ins Öl freigesetzt. Die Haltbarkeit ist umso höher, je griffiger die Riemenoberfläche ohne ÖL an Metalloberflächen anhaftet und reibt. Das sowieso vorhandene Öl wird so aktiv an der Riemenoberfläche gehalten und schmiert dann die Kontaktfläche zwischen Riemen und Metall umso besser.

### Bezugszeichenliste

1 Zahnriemen
2 Riemenrückenseite
3 zahnförmige Kraftübertragungsseite
4 elastischer Grundkörper
5,6 Textilauflage mit Elastomerbeschichtung
7 Optionaler Zugträger
8 Optionale Decklage
9 Optionale Textilauflage auf der Riemenrückenseite
10 Kraftmessdose
11 Zusatzgewicht
12 Reibklotz
13 Probe
14 Gleitreibungstisch
15 Zugseil
16 Umlenkrolle
17 Riemenstücke
18 Reibfläche
19 Riemen 1
20 Riemen 2
21 Riemenstück
22 Gleitstange

## Patentansprüche

1. Zahnriemen (1) zur Verwendung in Ölumgebung mit einer Riemenrückenseite (2) und einer zahnförmigen Kraftübertragungsseite (3), wobei der Zahnriemen (1) einen elastischen Grundkörper (4) umfasst, der zumindest auf der Kraftübertragungsseite (3) mindestens eine Textilauflage (5) aufweist, welche mit einer Elastomerbeschichtung (6) versehen ist, wobei die Elastomerbeschichtung (6) weniger als 1 phr an Gleitmitteln enthält, wobei die Elastomerbeschichtung (6)
a) mindestens 60 phr einer Polymerbasis, ausgewählt aus der Gruppe, bestehend aus voll- oder teilhydriertem Nitrilkautschuk (HNBR), Acrylatkautschuk (ACM), Ethylen-Acrylatkautschuk (EAM), Polyurethan (PU) und Kombinationen davon,
b) 3 bis 100 phr zumindest eines Füllstoffes mit einer spezifischen Oberfläche (BET) von mindestens 50 m²/g, umfasst, und **dadurch gekennzeichnet, dass** die Elastomerbeschichtung (6)
c) 3 bis 50 phr zumindest eines Reaktivverdünners, vorzugsweise ausgewählt aus der Gruppe, bestehend aus Acrylaten, Methacrylaten, Vinylethern, Glycidylethern und Kombinationen davon, umfasst.

2. Zahnriemen (1) nach Anspruch 1, wobei die Kraftübertragungsseite (3) des Zahnriemens (1) einen Reibkoeffizienten von mindestens 0,3, vorzugsweise von mindestens 0,6, gegen Stahl, gemessen im ölfreien Zustand, aufweist.

3. Zahnriemen (1) nach Anspruch 1 oder 2, wobei die Polymerbasis der Elastomerbeschichtung (6) voll- oder teilhydrierten Nitrilkautschuk (HNBR) umfasst.

4. Zahnriemen (1) nach einem der Ansprüche 1 bis 3, wobei die Textilauflage (5) aus der Gruppe, bestehend aus Geweben, Gewirken, Gestricken, Vliesen und Kombinationen davon, ausgewählt ist.

5. Zahnriemen (1) nach einem der Ansprüche 1 bis 4, wobei die Textilauflage (5) ein Material umfasst, ausgewählt aus Aramid, PA6.6, PA6, PET, Polyurethan und Kombinationen davon.

6. Zahnriemen (1) nach einem der Ansprüche 1 bis 5, wobei der elastische Grundkörper (4) auf der Riemenrückenseite (2) weiter einen Festigkeitsträger in Form von Zugsträngen und eine Decklage umfasst, wobei die Decklage ebenfalls mit einer Textilauflage versehen sein kann.

7. Zahnriemen (1) nach einem der Ansprüche 1 bis 6, wobei die Elastomerbeschichtung (6) eine Härte nach Shore A von 85 bis 95 aufweist.

8. Zahnriemen (1) nach einem der Ansprüche 1 bis 7, wobei die Elastomerbeschichtung (6) eine Dicke von 0,1 mm bis 0,9 mm aufweist.

9. Zahnriemen (1) nach einem der Ansprüche 1 bis 8, wobei die Elastomerbeschichtung (6) unter Einsatz von organischen Peroxiden vernetzt ist.

10. Zahnriemen (1) nach einem der Ansprüche 1 bis 9, wobei die Elastomerbeschichtung (6) weniger als 1 phr an Gleitmitteln, ausgewählt aus der Gruppe, bestehend aus fluorhaltigen Gleitmitteln wie Fluorpolymeren wie PTFE, PFA und PFPE, fluorfreien Gleitmitteln wie Molybdänsulfide, Graphite, Graphene, Talk, Glimmer, Bornitride, Silikone und Siloxanharze, und Kombinationen davon, enthält.

11. Zahnriemen (1) nach einem der Ansprüche 1 bis 10, wobei die Elastomerbeschichtung im Wesentlichen frei von fluorhaltigen Komponenten ist.

12. Verfahren zur Herstellung des Zahnriemens (1) nach einem der Ansprüche 1 bis 11, umfassend die folgenden Schritte:
(a) das Bereitstellen eines noch unvulkanisierten Riemenrohlings, der eine Riemenrückenseite und eine zahnförmige Kraftübertragungsseite aufweist,
(b) das Aufbringen einer Textilauflage auf die zahnförmige Kraftübertragungsseite des unvulkanisierten Riemenrohlings,
(c) das Aufbringen einer Elastomerbeschichtung auf die Textilauflage, vorzugsweise lösungsmittelfrei, wobei die Elastomerbeschichtung
- mindestens 60 phr einer Polymerbasis, ausgewählt aus der Gruppe, bestehend aus voll- oder teilhydriertem Nitrilkautschuk (HNBR), Acrylatkautschuk (ACM), Ethylen-Acrylatkautschuk (EAM), Polyurethan (PU), Urethanacrylat und Kombinationen davon,
- 3 bis 100 phr zumindest eines Füllstoffes mit einer spezifischen Oberfläche (BET) von mindestens 50 m²/g, und
- 3 bis 50 phr zumindest eines Reaktivverdünners, vorzugsweise ausgewählt aus der Gruppe, bestehend aus Acrylaten, Methacrylaten, Vinylethern, Glycidylethern und Kombinationen davon,
umfasst und weniger als 1 phr an Gleitmitteln enthält, und
(d) das Vulkanisieren des Riemenrohlings unter Ausbildung eines Haftverbundes von elastomeren Grundkörper (4), Textilauflage (5) und Elastomerbeschichtung (6).

## Claims

1. Timing belt (1) for use in oil environment having a belt back side (2) and a tooth-shaped power transmission side (3), wherein the timing belt (1) comprises an elastic base body (4), which at least on the power transmission side (3) has at least one textile pad (5) which is provided with an elastomer coating (6), wherein the elastomer coating (6) contains less than 1 phr lubricant, wherein the elastomer coating (6)
a) at least 60 phr of a polymer base selected from the group consisting of fully or partially hydrogenated nitrile rubber (HNBR), acrylic rubber (ACM), ethylene-acrylic rubber (EAM), polyurethane (PU) and combinations thereof,
b) 3 to 100 phr of at least one filler with a specific surface area (BET) of at least 50 m2/g, and **characterised in that** the elastomer coating (6),
c) 3 to 50 phr of at least one reactive diluent, preferably selected from the group consisting of acrylates, methacrylates, vinyl ethers, glycidyl ethers and combinations thereof.

2. A timing belt (1) according to claim 1, wherein the power transmission side (3) of the timing belt (1) has a friction coefficient of at least 0.3, preferably at least 0.6, against steel measured in the oil-free state.

3. A timing belt (1) according to claim 1 or 2, wherein the polymer base of the elastomer coating comprises (6) fully or partially hydrogenated nitrile rubber (HNBR).

4. Timing belt (1) according to any one of claims 1 to 3, wherein the textile pad (5) is selected from the group consisting of fabrics, knitted fabrics, knitted fabrics, nonwovens and combinations thereof.

5. A timing belt (1) according to any one of claims 1 to 4, wherein the textile pad (5) comprises a material selected from aramid, PA6.6, PA6, PET, polyurethane and combinations thereof.

6. Timing belt (1) according to any one of claims 1 to 5, wherein the elastic base body (4) on the back of the belt (2) further comprises a strength member in the form of tension strings and a cover layer, wherein the top layer may also be provided with a textile layer.

7. Timing belt (1) according to any one of claims 1 to 6, wherein the elastomer coating (6) has a hardness according to Shore A of 85 to 95.

8. Timing belt (1) according to any one of claims 1 to 7, wherein the elastomer coating (6) has a thickness of 0.1 mm to 0.9 mm.

9. Timing belt (1) according to any one of claims 1 to 8, wherein the elastomer coating (6) is cross-linked using organic peroxides.

10. A timing belt (1) according to any one of claims 1 to 9, wherein the elastomer coating (6) contains less than 1 phr of lubricants selected from the group consisting of fluorine-containing lubricants such as fluoropolymers such as PTFE, PFA and PFPE, fluorine-free lubricants such as molybdenum sulphides, graphites, graphene, talc, mica, boron nitrides, silicones and siloxane resins, and combinations thereof.

11. Timing belt (1) according to any one of claims 1 to 10, wherein the elastomer coating is substantially free of fluorine-containing components.

12. The method for producing the timing belt (1) according to any one of claims 1 to 11, comprising the following steps:
(a) the provision of a still unvulcanized belt blank that has a belt back side and a tooth-shaped power transmission side,
(b) the application of a textile pad to the tooth-shaped power transmission side of the unvulcanized belt blank,
(c) the application of an elastomer coating to the textile pad, preferably solvent-free, wherein the elastomer coating
- at least 60 phr of a polymer base selected from the group consisting of fully or partially hydrogenated nitrile rubber (HNBR), acrylic rubber (ACM), ethylene acrylic rubber (EAM), polyurethane (PU), urethane acrylate and combinations thereof,
- 3 to 100 phr of at least one filler with a specific surface area (BET) of at least 50 m2/g, and
- 3 to 50 phr of at least one reactive diluent, preferably selected from the group consisting of acrylates, methacrylates, vinyl ethers, glycidyl ethers and combinations thereof,
and contains less than 40 phr of lubricants, and
(d) Vulcanization of the belt blank with the formation of an adhesive bond of elastomeric base body (4), textile coating (5) and elastomer coating (6).

## Revendications

1. Courroie de distribution (1) pour une utilisation en environnement pétrolier avec un arrière de courroie (2) et un côté de transmission de puissance en forme de dent (3), où la courroie de distribution (1) est composée d'un corps de base élastique (4), qui, du moins côté transmission de puissance (3), possède au moins un tampon textile (5) doté d'un revêtement élastomère (6), où le revêtement élastomère (6) contient moins de 1 phr, tandis que le revêtement élastomère (6)
a) au moins 60 phr d'une base polymère sélectionnée dans le groupe composé de caoutchouc nitrile entièrement ou partiellement hydrogéné (HNBR), caoutchouc acrylique (ACM), caoutchouc éthylène-acrylique (EAM), polyuréthane (PU) et combinaisons de ceux-ci,
b) 3 à 100 phr d'au moins un produit de remplissage avec une surface spécifique (BET) d'au moins 50 m2/g, **caractérisé par** le revêtement en élastomère (6),
c) 3 à 50 phr d'au moins un diluant réactif, de préférence sélectionné parmi le groupe composé d'acrylates, méthacrylates, éthers vinyliques, éthers glycidyliques et combinaisons de ceux-ci.

2. Une courroie de distribution (1) selon l'affirmation 1, où le côté transmission de puissance (3) de la courroie (1) a un coefficient de friction d'au moins 0,3, de préférence au moins 0,6, par rapport à l'acier mesuré à l'état sans huile.

3. Une courroie de distribution (1) selon la revendication 1 ou 2, dans laquelle la base polymère du revêtement en élastomère comprend (6) du caoutchouc nitrile entièrement ou partiellement hydrogéné (HNBR).

4. Ceinture de distribution (1) selon l'une des revendications 1 à 3, où le tampon textile (5) est sélectionné parmi le groupe composé de tissus, tissus tricotés, tissus tricotés, non tissés et combinaisons de ceux-ci.

5. Une courroie de distribution (1) selon l'une des revendications 1 à 4, où le tampon textile (5) est composé d'un matériau sélectionné à partir d'aramide, PA6.6, PA6, PET, polyuréthane et combinaisons de ceux-ci.

6. La courroie de distribution (1) selon l'une des revendications 1 à 5, où le corps élastique de base (4) à l'arrière de la ceinture (2) comprend en outre un élément de résistance sous forme de cordes de tension et une couche de recouvrement, dans laquelle la couche supérieure peut également être équipée d'une couche textile.

7. Courroie de distribution (1) selon l'une des revendications 1 à 6, où le revêtement en élastomère (6) a une dureté selon le Shore A de 85 à 95.

8. Courroie de distribution (1) selon l'une des revendications 1 à 7, où le revêtement en élastomère (6) a une épaisseur de 0,1 mm à 0,9 mm.

9. La courroie de distribution (1) selon l'une des revendications 1 à 8, où le revêtement élastomère (6) est réticulé à l'aide de peroxydes organiques.

10. Une courroie de distribution (1) selon l'une des revendications 1 à 9, dans laquelle le revêtement élastomère (6) contient moins de 1 phr de lubrifiants sélectionnés dans le groupe composé de lubrifiants contenant du fluor tels que des fluoropolymères tels que le PTFE, le PFA et le PFPE, des lubrifiants sans fluor tels que les sulfures de molybdène, les graphites, le graphène, le talc, le mica, les nitrures de bore, les silicones et les résines siloxane, ainsi que des combinaisons de ceux-ci.

11. La courroie de distribution (1) selon l'une des revendications 1 à 10, où le revêtement d'élastomère est substantiellement exempt de composants contenant du fluor.

12. La méthode de production de la courroie de distribution (1) selon l'une des revendications 1 à 11, comprenant les étapes suivantes :
(a) la fourniture d'une courroie encore non vulcanisée avec un dos de courroie et un côté de transmission de puissance en forme de dent,
(b) l'application d'un tampon textile sur le côté de transmission de puissance en forme de dent de la courroie non vulcanisée,
(c) l'application d'un revêtement en élastomère sur le tampon textile, de préférence sans solvant, avec le revêtement en élastomère
- au moins 60 phr d'une base polymère sélectionnée dans le groupe composé de caoutchouc nitrile entièrement ou partiellement hydrogéné (HNBR), caoutchouc acrylique (ACM), caoutchouc acrylique d'éthylène (EAM), polyuréthane (PU), acrylate d'uréthane et combinaisons de ceux-ci,
- 3 à 100 phr d'au moins un remplissage avec une surface spécifique (BET) d'au moins 50 m2/g, et
- 3 à 50 phr d'au moins un diluant réactif, de préférence sélectionné parmi le groupe composé d'acrylates, méthacrylates, éthers vinyliques, glycidylèters et combinaisons de ceux-ci,
et contient moins de 40 phr de lubrifiants, et
(d) Vulcanisation du revêtement de ceinture par la formation d'une liaison adhésive de base élastomérique (4), de revêtement textile (5) et d'élastomère (6).
